# EUROPEAN PATENT SPECIFICATION

(11) **EP 1 832 008 B1**
(45) Date of publication and mention of the grant of the patent: **06.09.2017**
(21) Application number: 05822086.4
(22) Date of filing: 21.12.2005
(51) Int. Cl.: H04B 3/56

(54) **A ELECTRIC HOME APPLIANCE ABLE TO POWER LINE COMMUNICATION**
ELEKTRISCHES HAUSHALTSGERÄT MIT DER FÄHIGKEIT ZU STROMLEITUNGSKOMMUNIKATION
APPAREIL MÉNAGER ÉLECTRIQUE SUSCEPTIBLE DE COMMUNICATION SUR COURANT PORTEUR

(30) Priority: 30.12.2004 KR 20040116090; 30.12.2004 KR 20040116089; 30.12.2004 KR 20040116088
(43) Date of publication of application: 12.09.2007
(73) Proprietor: LG Electronics Inc., Seoul 07336 (KR)
(72) Inventor: NO, Yang Hwan, Changwon-si, Gyeongsangnam-do 641-751 (KR); KWON, Yong Hoan, Busan 607-828 (KR); LEE, Hoon Bong, Gyeongsangnam-do 641-110 (KR); JANG, Ho Sung, Gyeongsangnam-do 667-891 (KR); CHOI, Gyoo Cheol, Changwon-Si, Gyeongsangnam-do 641-906 (KR); CHO, Han Ki, Changw on-si, Gyeongsangnam-do 641-200 (KR); KIM, Yong Tae, Gimhae-si, Gyeongsangnam-do 621-830 (KR)
(74) Representative: Ter Meer Steinmeister & Partner
(86) International application number: PCT/KR2005/004435
(87) International publication number: WO 2006/071020

(56) References cited:
- EP-A1- 1 343 253
- US-A1- 2002 140 547
- US-A1- 2004 111 496

## Description

### Technical Field

The present invention relates to home appliances, and more particularly, to a home appliance, such as a washing machine or a dryer, which enables a user to make power line communication therewith for monitoring progress thereof, remotely.

### Background Art

In general, the home appliance, an apparatus for operating by using electricity in a home, converts the electricity into a light, heat, or power, for convenience of a home life.

Recently, different from other home appliances, since a washing machine, or a dryer using electricity as power, not only occupies a large installation space, but also has big noise and vibration generated when the washing machine or dryer is in operation, the washing machine, or a dryer is in general installed at a place, such as veranda, far from a living room.

Particularly, due to structures of most houses in the USA, and Europe, the washing machine is installed in a cellar, or separate warehouse, or the like, far from a living space in practice.

Thus, the installation of the washing machine far from a living room where a user stays most of time causes difficulty in knowing progress of the washing machine, such as the present cycle of the washing machine or a time period left, easily.

That is, it is required for the user to go to the place where the washing machine is from time to time, for determining a state of progress of the washing machine every time, personally.

Moreover, after putting the washing machine into operation, if the user forgets a fact that the user put the washing machine into operation for a moment or completely, the laundry finished washing rumples, or has microbes increased thereon, to damage the laundry.

Furthermore, the user is liable to fail to notice an error in the cycle of the washing machine, to fail in taking a proper countermeasure, leaving the laundry in contact with detergent and the washing water for a long time to cause decoloring of the laundry, thereby damaging cloth of the laundry itself.

Therefore, a remote monitoring system is in need for monitoring the home appliance from a user's desired place.

US 2002/0140547 A1 discloses an apparatus and method of clock synchronization of a powerline modem network for a plurality of devices. The powerline modem permits communication between the plurality of devices over a powerline network.

US 2004/0111496 A1 discloses a home network system and a method for adding and/or deleting home appliances thereto/therefrom. The home network system is constructed so that a plurality of home appliances can transmit and receive data to/from one another. A plurality of power line modems are connected respectively to the home appliances to modulate and demodulate data transmitted and received over an internal network by the home appliances.

EP 1 343 253 A1 discloses a power line communication MODEM including a MODEM main body portion and a power supply portion.

### Disclosure of Invention

### Technical Problem

The object of the present invention, designed for solving the problems of the related art, lies on providing a home appliance which enables a user to make power line communication therewith, for easy, and remote monitoring, and control of a state of the home appliance, such as a washing machine, or dryer far from a user, for convenient and effective use of the home appliance.

### Technical Solution

This object is solved by the subject-matter of the independent claim. Further advantageous embodiments and refinements are described in the respective dependent claims.

A home appliance is provided which enables power cable communication therewith, including a body forming an exterior of the home appliance, a main control unit at the body, for making various kinds of control of the home appliance, and a power cable communication modem at the body, for transmission/reception of various kinds of data to/from a remote monitor which monitors the home appliance remotely.

In another aspect, a home appliance which enables power cable communication therewith, includes a body forming an exterior of the home appliance, a main control unit at the body, for making various kinds of control of the home appliance, a power cable communication modem at the body, for transmission/ reception of various kinds of data to/from a remote monitor which monitors the home appliance remotely, a line connector connected both to the signal lines of the main control unit and the power line of the home appliance, and a line connection connector at the power cable communication modem for making the power cable communication modem to be connected to the signal lines of the main control unit and the power line of the home appliance at a time as the line connection connector is detachably connected to the line connector.

In another aspect, a home appliance which enables power cable communication therewith, includes a body forming an exterior of the home appliance, a main control unit at the body, for making various kinds of control of the home appliance, a power cable communication modem at the body, for transmission/ reception of various kinds of data to/from a remote monitor which monitors the home appliance remotely, a line connector connected both to the signal lines of the main control unit and the power line of the home appliance, a line connection connector at the power cable communication modem for making the power cable communication modem to be connected to the signal lines of the main control unit and the power line of the home appliance at a time as the line connection connector is detachably connected to the line connector, and a connector cover for detachable connection to the line connector when the power cable communication modem is not mounted to the line connector for preventing foreign matters from infiltrating into the line connector.

In another aspect, a home appliance which enables power cable communication therewith, includes a body forming an exterior of the home appliance, a main control unit at the body, for making various kinds of control of the home appliance, a power cable communication modem at the body, for transmission/ reception of various kinds of data to/from a remote monitor which monitors the home appliance remotely, a signal connector connected to the signal lines at the main control unit, a power connector connected to the power line to the home appliance, a signal connection connector at the power cable communication modem for connection to the signal connector, a power source connection connector at the power cable communication modem for connection to the power connector, and a connector cover for detachable connection to the line connector when the power cable communication modem is not mounted to the line connector for preventing foreign matters from infiltrating into the line connector.

### Advantageous Effects

The home appliance which enables power cable communication therewith of the present invention has the following effects.

First, the user's easy and remote detection and control of a state of a home appliance is permitted.

Second, the user can take an appropriate measure at an appropriate time for the home appliance enabling an effective management of the home appliance, such as maintenance of the home appliance.

Third, user's effective management of things, such as laundry, cooking objects, and the like, used for the home appliance is permitted.

Fourth, easy mounting of the power cable communication modem to the home appliance is permitted.

Fifth, easy connection of the power cable, and signal lines to the power cable communication modem is permitted.

### Brief Description of the Drawings

The accompanying drawings, which are included to provide a further understanding of the invention, illustrate embodiment(s) of the invention and together with the description serve to explain the principle of the invention. In the drawings;
FIG. 1 illustrates a diagram showing a state of use of a home appliance which enables power line communication therewith in accordance with a preferred embodiment of the present invention, schematically;
FIG. 2 illustrates a perspective view of a home appliance which enables power line communication therewith in accordance with a first preferred embodiment of the present invention;
FIG. 3 illustrates a perspective view of a home appliance which enables power line communication therewith in accordance with an example useful for understanding the invention;
FIG. 4 illustrates a perspective view of a home appliance which enables power line communication therewith in accordance with a second preferred embodiment of the present invention;
FIG. 5 illustrates a perspective view of a secured state of the line connector in FIG. 4 seen from an inside of a body;
FIG. 6 illustrates a perspective view of a connector cover on the line connector in FIG. 4;
FIG. 7 illustrates a perspective view of the cover in FIG. 6;
FIG. 8 illustrates a cross section of the connector cover in FIG. 6 connected to a line connector;
FIG. 9 illustrates a cross section of the connector cover in FIG. 6 showing a state hooks on elastic pieces thereof are disengaged from a line connector;
FIG. 10 illustrates a perspective view of a home appliance which enables power line communication therewith in accordance with a second example useful for understanding the invention; and
FIG. 11 illustrates a perspective view showing secured states of a signal connector and a power connector in FIG. 10, seen from an inside of a body.

### Best Mode for Carrying Out the Invention

Preferred embodiments of the present invention will be described with reference to the attached drawings.

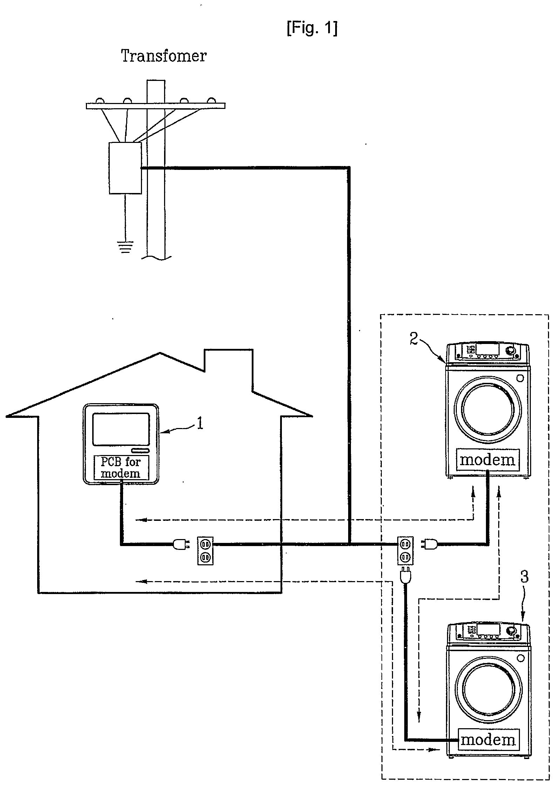

Referring to FIG. 1, a power cable communication modem is mounted on each of home appliances, such as a washing machine 2 and a dryer 3 (hereafter called as home appliances, collectively) in a space (a veranda, or cellar) far from a living room or a bed room for making remote monitoring.

A remote monitor 1, provided to a place where a user stays most of the time (i.e., a place the user desires to make the remote monitoring), is connected to each of the power cable communication modems on the home appliances with power cables for transmitting progress of the home appliances to the user.

That is, the remote monitor 1 has a display circuit board (not shown), and a communication modem (not shown) mounted therein, for transmission/reception of data to/ from the power cable modems on the home appliances, so that the user can monitor progress of the home appliances.

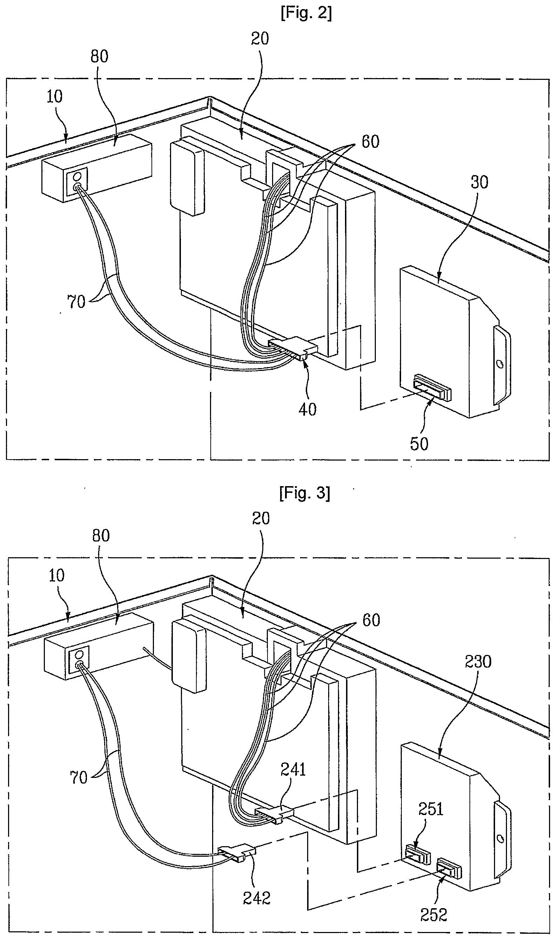

A home appliance which enables power line communication therewith in accordance with a first preferred embodiment of the present invention will be described with reference to FIG. 2.

Referring to FIG. 2, the home appliance includes a body 10, a main control unit 20, and a power cable communication modem 30.

The body 10 forms an exterior of the home appliance.

The main control unit 20 is in the body 10 for making various kinds of control of the home appliance.

The power cable communication modem 30 is of a built-in type in the body 10, connected to signal lines 60 at the main control unit 20 and a power line for the home appliance for transmission/reception of various data to/from the remote monitor 1 (see FIG. 1) that makes remote monitoring of a state of the home appliance.

In the meantime, the power cable communication modem 30 may be fastened to an inside of the body 10 with fastening members (not shown), or to a separate fixing bracket fixedly secured to the inside of the body 10.

The signal lines 60 at the main control unit 20 and the power cables 70 for the home appliance are connected to one line connector 40, and the power cable communication modem 30 has a line connection connector 50 for detachable connection of the line connector 40.

Accordingly, when the line connector 40 is connected to the line connection connector 50, the power cable communication modem 30 is connected both to the main control unit 20 and a power source, at a time.

In this instance, it is preferable that the line connector 40 and the line connection connector 50 are detachably connected to each other in shapes of a female terminal and a male terminal of a hook type.

That is, the line connector 40 and the line connection connector 50 are electrically connected as the female terminal and the male terminal are brought into contact with each other at the moment the line connector 40 and the line connection connector 50 are connected.

In the meantime, for preventing noise of an external power source from transmitting to the main control unit 20 and the power cable communication modem 30, the home appliance further includes a noise filter 80.

The noise filter 80 has an input terminal connected to an external power line to the home appliance, and an output terminal in the body 10 for connection to the main control unit 20 and the line connector 40.

That is, the power to the home appliance has the noise removed therefrom as the power passes through the noise filter 80 before being supplied to the main control unit 20 and the power cable communication modem 30.

Next, a home appliance which enables power line communication therewith in accordance with an example useful for understanding the invention will be described with reference to FIG. 3.

Referring to FIG. 3, alike the first embodiment, the home appliance includes a body 10, a main control unit 20, and a power cable communication modem 230.

The power cable communication modem 230 also is of a built-in type fastened to an inside of the body only with fastening members (not shown) or with a separate fixing bracket (not shown).

However, the power cable communication modem 230 in the home appliance which enables power line communication therewith in accordance with an example useful for understanding the invention is connected to the main control unit 20 and a power source through a signal connector 241, and a power connector 241, and a signal connection connector 251 and a power connection connector 252 corresponding thereto, respectively.

In more detail, the signal connector 241 is connected to the signal lines 60 at the main control unit 20, the power connector 242 is connected to the power source line 70 through which a power is supplied, and the power cable communication modem 230 is provided with a signal connection connector 251 and a power connection connector 252 in correspondence to the signal connector 241 and the power connector 242, respectively.

As the signal connector 241 is connected to the signal connection connector 251, and the power connector 242 is connected to the power source connection connector 252, the power cable communication modem 230 is connected both to the main control unit 20 and the power source, to transmit/receive various data to/from a remote monitor 1 (see FIG. 1) that makes remote monitoring of a state of the home appliance.

In this instance, it is preferable that the signal connector 241 and the signal connection connector 251, and the power connector 242 and the power source connection connector 252 are detachably connected to each other in a hook type with shapes of a female terminal and a male terminal, respectively.

That is, the signal connector 241 and the signal connection connector 251, and the power connector 242 and the power source connection connector 252 are electrically connected respectively as the female terminal and the male terminal are engaged with each other, to bring the female terminal and the male terminal in contact with each other.

In the meantime, the home appliance in accordance with a second embodiment of the present invention also further includes a noise filter 80 for preventing noise of external power source from transmitting to the main control unit 20 and the power cable communication modem 230.

The noise filter 80 has an input terminal connected to an external power cable to the home appliance, and an output terminal in the body 10 for connection to the main control unit 20 and the power connector 242.

That is, the power to the home appliance has the noise removed therefrom as the power passes through the noise filter 80 before being supplied to the main control unit 20 and the power cable communication modem 230.

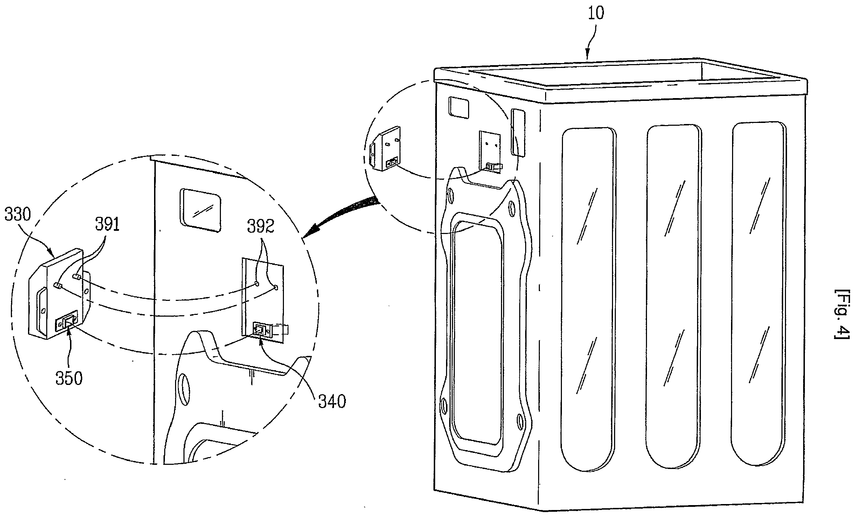

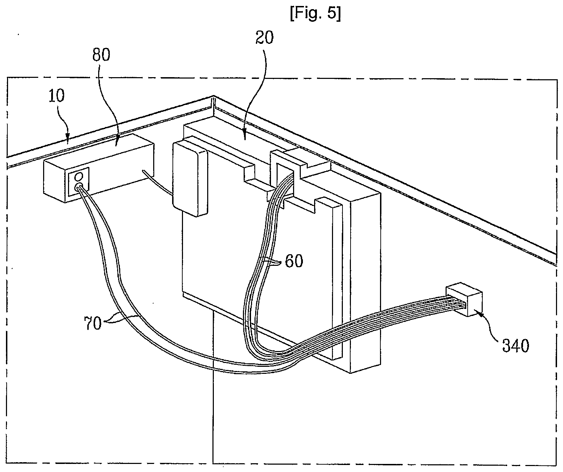

Next, a home appliance which enables power line communication therewith in accordance with a second preferred embodiment of the present invention will be described, with reference to FIGS. 4 and 5.

Referring to FIGS. 4 and 5, alike the first embodiment, the home appliance which enables power line communication therewith in accordance with a second preferred embodiment of the present invention includes a body 10, a main control unit 20, and a power cable communication modem 330.

The body 10 forms an exterior of the home appliance, and the main control unit 20 is in the body 10 for making various kinds of control of the home appliance.

However, the power cable communication modem 330 is of an exterior mounting type to be exposed to an outside of the body 10, and connected to signal lines 60 at the main control unit 20 and a power line 70 for the home appliance, for transmission/ reception of various data to/from the remote monitor 1 (see FIG. 1) that makes remote monitoring of a state of the home appliance.

In the meantime, the power cable communication modem 330 may be fastened to an outside of the body 10 with fastening members (not shown), or to a separate fixing bracket (not shown) fixedly secured to the outside of the body 10.

It is preferable that there are a positioning boss 391 formed on an outside surface of the power cable communication modem 330, or the body 10, and a positioning hole 392 on an opposite side of the positioning boss 391 for joining with the positioning boss 391.

That is, mounting work of the power cable communication modem 330 can be improved by making the mounting work to pass through a preliminary mounting stage in which the positioning boss 391 is placed in the positioning hole 392 before the power cable communication modem 330 is mounted to the outside surface of the body 10 with the fastening members.

In the meantime, the signal lines 60 at the main control unit 20 and the power cables 70 for the home appliance are connected to one line connector 340 which is fixedly secured to the body 10 so as to be exposed to an outside of the body 10. The power cable communication modem 330 has a line connection connector 350 for detachable connection of the line connector 340.

Accordingly, when the line connection connector 350 of the power cable communication modem 330 is connected to the line connector 340 exposed to an outside surface of the body 10, the power cable communication modem 330 is connected both to the main control unit 20 and a power source, at a time.

In this instance, it is preferable that the line connector 340 and the line connection connector 350 are detachably connected to each other in shapes of a female terminal and a male terminal of a hook type.

That is, the line connector 340 and the line connection connector 350 are electrically connected as the female terminal and the male terminal are brought into contact with each other at the moment the line connector 340 and the line connection connector 350 are connected.

In the meantime, for preventing noise of an external power source from transmitting to the main control unit 20 and the power cable communication modem 330, the home appliance further includes a noise filter 80.

The noise filter 80 has an input terminal connected to an external power cable to the home appliance, and an output terminal in the body 10 for connection to the main control unit 20 and the line connector 340.

That is, the power to the home appliance has the noise removed therefrom as the power passes through the noise filter 80 before being supplied to the main control unit 20 and the power cable communication modem 330.

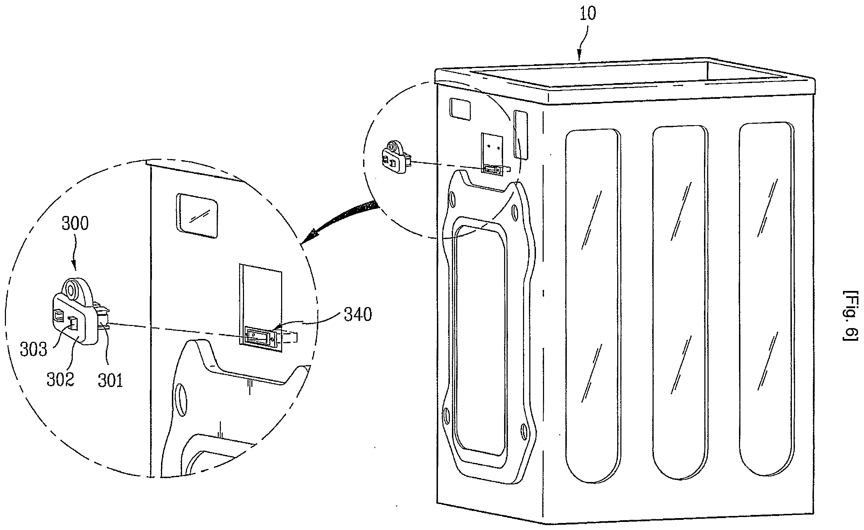

In the meantime, referring to FIG. 6, the home appliance in accordance with the third preferred embodiment of the present invention is vulnerable to infiltration of foreign matters, such as dust, into the line connector 340 if the power cable communication modem 330 is not mounted thereon.

Accordingly, for preventing this from taking place, the line connector 340 has a connector cover 300 detachably provided thereto when the power cable communication modem 330 in not mounted.

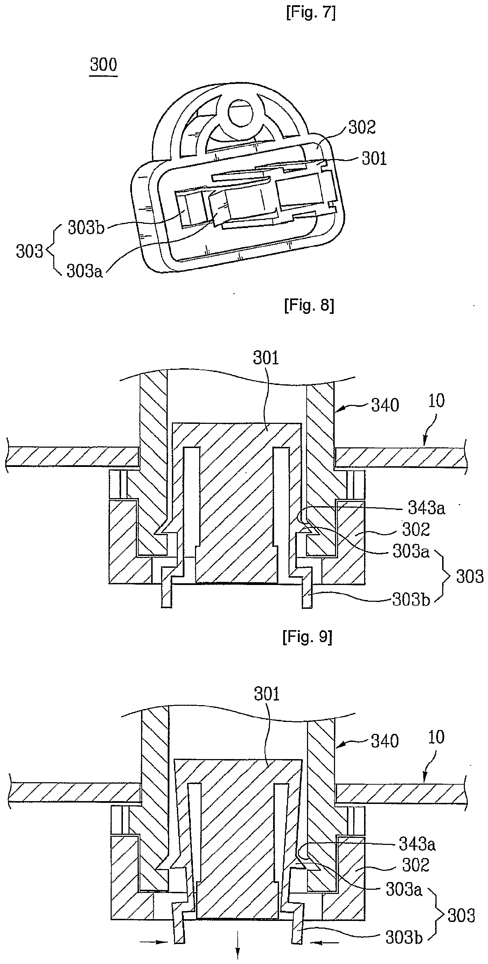

Referring to FIGS. 7 to 9, the connector cover 300 includes a plug portion 301 and a cover portion 302.

The plug portion 301 is placed in the line connector 340 when the connector cover
300 is mounted to the line connector 340, and the cover portion 302, at rear of the plug portion 301, encloses a circumference of the line connector 340 when the connector cover 300 is mounted to the line connector 340.

It is preferable that the line connector 340 has hook slots 343a in an inside thereof, and the connector cover 300 includes elastic pieces each having a hook 303a in correspondence to each of the hook slots 343 a.

That is, the elastic piece 303 on the connector cover 300 includes the hook 303a in correspondence to the hook slot 343a, with an end 303b of the hook 303a extended through a pass through hole in the cover portion 302 so as to be exposed to an outside of the cover portion 302, for enabling handling.

In the meantime, it is effective that the connector cover 300 is formed of plastic or synthetic resin.

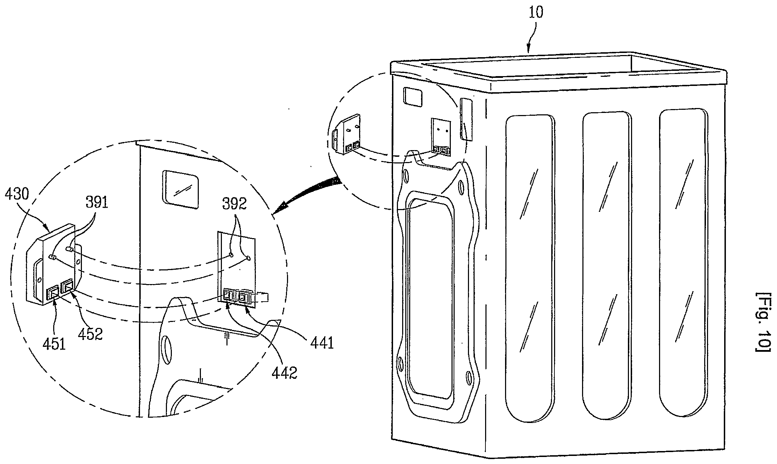

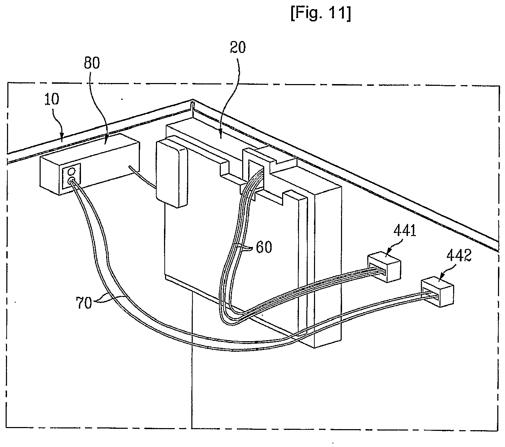

Next, a home appliance which enables power line communication therewith in accordance with a second example useful for understanding the invention will be described, with reference to FIGS. 10 and 11.

Referring to FIGS. 10 and 11, alike the third embodiment, the home appliance which enables power line communication therewith in accordance with a second example useful for understanding the invention includes a body 10, a main control unit 20, and a power cable communication modem 430.

The power cable communication modem 430 is also of an exterior mounting type to be fastened to an outside of the body 10 only with fastening members (not shown), or to a separate fixing bracket (not shown).

It is preferable that there are a positioning boss 391 formed on an outside surface of the power cable communication modem 430, or the body 10, and a positioning hole 392 392 on an opposite side of the positioning boss 391 for joining with the positioning boss 391.

That is, mounting work of the power cable communication modem 430 can be improved by making the mounting work to pass through a preliminary mounting stage in which the positioning boss 391 is placed in the positioning hole 392 before the power cable communication modem 430 is mounted to the outside surface of the body 10 with the fastening members.

The body 10 forms an exterior of the home appliance, and the main control unit 20 is in the body 10 for making various kinds of control of the home appliance.

However, the power cable communication modem 430 is connected to the main control unit 20 and a power source through a signal connector 441, and a power connector 442, and a signal connection connector 451 and a power connection connector 452 to be connected to the signal connector 441 and the power connector 442, respectively.

In more detail, the signal connector 441 is connected to signal lines 60 at the main control unit 20, and the signal connector 441 and the power connector 442 are secured to the body 10 so as to be exposed to an outside of the body 10.

The power cable communication modem 430 is provided with a signal connection connector 451 and a power source connection connector 452 in correspondence to the signal connector 441 and the power connector 442, respectively.

Therefore, following connection of the signal connector 441 to the signal connection connector 451, and connection of the power connector 442 to the power source connection connector 452, the power cable communication modem 430 is connected to the main control unit 20 and the power source at a time, for transmission/ reception of various data to/from the remote monitor 1 (see FIG. 1) that makes remote monitoring of a state of the home appliance by a power cable communication system.

In this instance, it is preferable that the signal connector 441 and the signal connection connector 451, and the power connector 442 and the power source connection connector 452 are detachably connected to each other in shapes of female terminals and male terminals of a hook type.

That is, the signal connector 441 and the signal connection connector 451, and the power connector 442 and the power source connection connector 452 are electrically connected as the female terminals and the male terminals are brought into contact with each other at the moment the signal connector 441 and the signal connection connector 451, and the power connector 442 and the power source connection connector 452are connected, respectively.

In the meantime, for preventing noise of an external power source from transmitting to the main control unit 20 and the power cable communication modem 430, the home appliance in accordance with the second example further includes a noise filter 80.

The noise filter 80 has an input terminal connected to an external power cable to the home appliance, and an output terminal in the body 10 for connection to the main control unit 20 and the power connector 442.

That is, the power to the home appliance has the noise removed therefrom as the power passes through the noise filter 80 before being supplied to the main control unit 20 and the power cable communication modem 430.

In the meantime, though not shown, the home appliance in accordance with the second example is also vulnerable to infiltration of foreign matters, such as dust, into the signal connector 441 and the power connector 442 if the power cable communication modem 430 is not mounted thereon.

Accordingly, for preventing this from taking place, the signal connector 441 and the power connector 442 have connector covers respectively provided thereto when the power cable communication modem 430 in not mounted.

It is preferable that the connector covers respectively provided to the signal connector 441 and the power connector 442 have shapes identical to a shape of the connector cover 300 in FIGS. 6 to 9.

That is, it is preferable that the connector covers are formed of plastic or synthetic resin, with shapes identical to the connector cover 300, and with sizes corresponding to the signal connector 441 and the power connector 442, respectively.

Accordingly, the home appliance in accordance with the second example can also prevent foreign matters, such as dust, from infiltrating into insides of the signal connector 441 and the power connector 442 in a case the power cable communication modem 430 is not mounted.

It will be apparent to those skilled in the art that various modifications and variations can be made in the present invention without departing from the scope of the inventions. Thus, it is intended that the present invention covers the modifications and variations of this invention provided they cone within the scope of the appended claims and their equivalents. Industrial Applicability

The remote monitor for home appliance of the present invention has significantly high industrial applicability because the remote monitor permits, firstly, the user's easy and remote detection and control of a state of a home appliance, secondly, the user to take an appropriate measure at an appropriate time for the home appliance enabling an effective management of the home appliance, such as maintenance of the home appliance, thirdly, user's effective management of things, such as laundry, cooking objects, and the like, used for the home appliance, fourthly, easy mounting of the power cable communication modem to the home appliance, and fifthly, easy connection of the power cable, and signal lines to the power cable communication modem.

## Claims

1. A home appliance which enables power cable communication therewith, comprising:
a body (10) forming an exterior of the home appliance;
a main control unit (20) at the body (10), for making of control of the home appliance; and
a power cable communication modem (30, 330) at the body (10), for transmission/reception of data to/from a remote monitor (1) which monitors the home appliance remotely **characterised in that**:
a line connector (40, 340) connected both to the signal lines (60) of the main control unit (20) and the power line (70) of the home appliance;
a line connection connector (50, 350) at the power cable communication modem (30, 330) for making the power cable communication modem (30, 330) to be connected to the signal lines (60) of the main control unit (20) and the power line (70) of the home appliance at a time as the line connection connector (50, 350) is detachably connected to the line connector (40, 340); and
a connector cover (300) for detachable connection to the line connector (40, 340) when the power cable communication modem (30, 330) is not mounted to the line connector (40, 340) for preventing foreign matters from infiltrating into the line connector (40, 340).

2. The home appliance as claimed in claim 1, wherein the power cable communication modem (30, 330) is connected to signal lines (60) of the main control unit (20) and a power line (70) of the home appliance for transmission/reception of data to/from the remote monitor (1).

3. The home appliance as claimed in claim 1, wherein the line connector (40, 340) and the line connection connector (50, 350) are detachably connected to each other in shapes of a female terminal and a male terminal of a hook type.

4. The home appliance as claimed in claim 1, wherein the connector cover (300) includes a plug portion (301) for being placed in the line connector (40, 340), and a cover portion (302) at rear of the plug portion (301) for enclosing a circumference of the line connector (40, 340).

5. The home appliance as claimed in claim 4, wherein the plug portion (301) includes a hook (303a) for detachable engagement with a hook slot (343a) inside of the line connector (340), and an end (303b) of the hook (303a) extended through a pass through hole in the cover portion (302) so as to be exposed to an outside of the cover portion (302), for enabling handling.

6. The home appliance as claimed in claim 1, wherein the connector cover (300) is formed of plastic or synthetic resin.

7. The home appliance as claimed in claim 1, further comprising: a signal connector connected to the signal lines (60) at the main control unit (20); a power connector connected to the power line (70) to the home appliance; a signal connection connector at the power cable communication modem (30, 330) for connection to the signal connector; and a power source connection connector at the power cable communication modem (30, 330) for connection to the power connector.

8. The home appliance as claimed in claim 7, wherein the signal connector and the signal connection connector, and the power connector and the power source connection connector are detachably connected to each other respectively in shapes of female terminals and male terminals of a hook type.

9. The home appliance as claimed in claim 1, wherein the power cable communication modem (30) is a built-in type modem provided to an inside of the body (10).

10. The home appliance as claimed in claim 9, wherein the power cable communication modem (30) is fixedly secured to an inside surface of the body (10) with fastening members.

11. The home appliance as claimed in claim 9, wherein the power cable communication modem (30) is fixedly secured to a fixing bracket on an inside surface of the body (10).

12. The home appliance as claimed in claim 1, wherein the power cable communication modem (330) is of an exterior mounting type to be exposed to an outside of the body (10).

13. The home appliance as claimed in claim 12, wherein the power cable communication modem (330) is fixedly secured to an outside surface of the body (10) with fastening members.

14. The home appliance as claimed in claim 12, wherein one of the power cable communication modem (330) and the body (10) includes a positioning boss (391), and the other one of the power cable communication modem (330) and the body (10) includes a positioning hole (392) opposite to the positioning boss (391) for placing the positioning boss (391) therein.

15. The home appliance as claimed in claim 1, further comprising a noise filter (80) in the body (10) for preventing noise of a power source from transmitting to the main control unit (20) and the power cable communication modem (30, 330).

16. The home appliance as claimed in claim 1, wherein the noise filter (80) has an input terminal connected to an external power line to the home appliance, and an output terminal connected to the main control unit (20) and the power cable communication modem (30, 330).

## Patentansprüche

1. Haushaltsgerät, das eine Kommunikation über Stromkabel ermöglicht, und das Folgendes umfasst:
einen Körper (10), der eine Außenseite des Haushaltsgeräts bildet;
eine Hauptsteuerungseinheit (20) an dem Körper (10), um die Steuerung des Haushaltsgeräts herzustellen; und
ein Stromkabelkommunikationsmodem (30, 330) an dem Körper (10), um Daten zu einem entfernten Überwachungsgerät (1) zu übertragen bzw. um Daten von einem entfernten Überwachungsgerät (1) zu empfangen, das das Haushaltsgerät aus der Ferne überwacht, **dadurch gekennzeichnet, dass**:
ein Leitungsverbinder (40, 340) sowohl mit den Signalleitungen (60) der Hauptsteuerungseinheit (20) als auch der Stromleitung (70) des Haushaltsgeräts verbunden ist;
einen Leitungsanschlussverbinder (50, 350) an dem Stromkabelkommunikationsmodem (30, 330), um das Stromkabelkommunikationsmodem (30, 330) mit den Signalleitungen (60) der Hauptsteuerungseinheit (20) und der Stromleitung (70) des Haushaltsgeräts zu verbinden, wenn der Leitungsanschlussverbinder (50, 350) mit dem Leitungsverbinder (40, 340) lösbar verbunden ist; und
eine Verbinderabdeckung (300) für eine lösbare Verbindung mit dem Leitungsverbinder (40, 340), wenn das Stromkabelkommunikationsmodem (30, 330) nicht an den Leitungsverbinder (40, 340) montiert ist, um zu verhindern, dass Fremdstoffe in den Leitungsverbinder (40, 340) eindringen.

2. Haushaltsgerät nach Anspruch 1, wobei das Stromkabelkommunikationsmodem (30, 330) mit Signalleitungen (60) der Hauptsteuerungseinheit (20) und einer Stromleitung (70) des Haushaltsgeräts verbunden ist, um Daten zu dem entfernten Überwachungsgerät (1) zu übertragen oder Daten von dem entfernten Überwachungsgerät (1) zu empfangen.

3. Haushaltsgerät nach Anspruch 1, wobei der Leitungsverbinder (40, 340) und der Leitungsanschlussverbinder (50, 350) miteinander lösbar in Form eines Buchsenanschlusses und eines Steckeranschlusses des Hakentyps verbunden sind.

4. Haushaltsgerät nach Anspruch 1, wobei die Verbinderabdeckung (300) einen Steckabschnitt (301), um in dem Leitungsverbinder (40, 340) positioniert zu werden, und einen Abdeckabschnitt (302) an der Rückseite des Steckabschnitts (301), um einen Umfang des Leitungsverbinders (40, 340) zu umschließen, enthält.

5. Haushaltsgerät nach Anspruch 4, wobei der Steckabschnitt (301) einen Haken (303a) zum lösbaren Eingriff in einem Hakenschlitz (343a) in dem Leitungsverbinder (340) und ein Ende (303b) des Hakens (303a) enthält, das sich durch ein Durchgangsloch in dem Abdeckabschnitt (302) erstreckt, um an einer Außenseite des Abdeckabschnitts (302) frei zu liegen, um eine Handhabung zu ermöglichen.

6. Haushaltsgerät nach Anspruch 1, wobei die Verbinderabdeckung (300) aus Kunststoff oder Kunstharz gebildet ist.

7. Haushaltsgerät nach Anspruch 1, das ferner Folgendes umfasst: einen Signalverbinder, der an der Hauptsteuereinheit (20) mit den Signalleitungen (60) verbunden ist; einen Stromverbinder, der mit der Stromleitung (70) zu dem Haushaltsgerät verbunden ist; einen Signalanschlussverbinder an dem Stromkabelkommunikationsmodem (30, 330) zur Verbindung mit dem Signalverbinder; und einen Stromquellenanschlussverbinder an dem Stromkabelkommunikationsmodem (30, 330) zur Verbindung mit dem Stromverbinder.

8. Haushaltsgerät nach Anspruch 7, wobei der Signalverbinder und der Signalanschlussverbinder, der Stromverbinder und der Stromquellenanschlussverbinder jeweils in Form von Buchsenanschlüssen und Steckeranschlüssen des Hakentyps lösbar miteinander verbunden sind.

9. Haushaltsgerät nach Anspruch 1, wobei das Stromkabelkommunikationsmodem (30) ein eingebautes Modem ist, das im Inneren des Körpers (10) vorgesehen ist.

10. Haushaltsgerät nach Anspruch 9, wobei das Stromkabelkommunikationsmodem (30) mit Befestigungselementen an einer Innenfläche des Körpers (10) fest angebracht ist.

11. Haushaltsgerät nach Anspruch 9, wobei das Stromkabelkommunikationsmodem (30) an einer Befestigungsklammer an einer Innenfläche des Körpers (10) fest angebracht ist.

12. Haushaltsgerät nach Anspruch 1, wobei das Stromkabelkommunikationsmodem (330) von einem äußeren Montagetyp ist, um an einer Außenseite des Körpers (10) frei zu liegen.

13. Haushaltsgerät nach Anspruch 12, wobei das Stromkabelkommunikationsmodem (330) mit Befestigungselementen an einer Außenfläche des Körpers (10) fest angebracht ist.

14. Haushaltsgerät nach Anspruch 12, wobei das Stromkabelkommunikationsmodem (330) oder der Körper (10) einen Positionierungsvorsprung (391) enthält, und das andere des Stromkabelkommunikationsmodems (330) oder des Körpers (10) eine Positionierungsöffnung (392) enthält, die dem Positionierungsvorsprung (391) gegenüberliegt, um den Positionierungsvorsprung (391) darin zu positionieren.

15. Haushaltsgerät nach Anspruch 1, das ferner in dem Körper (10) ein Rauschfilter (80) umfasst, um zu verhindern, dass ein Rauschen einer Stromquelle zu der Hauptsteuerungseinheit (20) und dem Stromkabelkommunikationsmodem (30, 330) übertragen wird.

16. Haushaltsgerät nach Anspruch 1, wobei das Rauschfilter (80) einen Eingangsanschluss, der mit einer äußeren Stromleitung zu dem Haushaltsgerät verbunden ist, und einen Ausgangsanschluss, der mit der Hauptsteuerungseinheit (20) und dem Stromkabelkommunikationsmodem (30, 330) verbunden ist, aufweist.

## Revendications

1. Appareil ménager permettant une communication sur courant porteur avec celui-ci, comprenant :
un corps (10) constituant un extérieur de l'appareil ménager ;
une unité de commande principale (20) au corps (10), pour commander l'appareil ménager ; et
un modem de communication sur courant porteur (30, 330) au corps (10), pour la transmission/réception de données à destination/en provenance d'un moniteur distant (1) surveillant l'appareil ménager à distance,
**caractérisé par** :
un connecteur de ligne (40, 340) raccordé aux lignes de signaux (60) de l'unité de commande principale (20) et à la ligne électrique (70) de l'appareil ménager ;
un connecteur de raccordement de ligne (50, 350) au modem de communication sur courant porteur (30, 330) pour raccorder le modem de communication sur courant porteur (30, 330) aux lignes de signaux (60) de l'unité de commande principale (20) et à la ligne électrique (70) de l'appareil ménager lorsque le connecteur de raccordement de ligne (50, 350) est raccordé, de manière détachable, au connecteur de ligne (40, 340) ; et
un couvercle de connecteur (300) pour un raccordement détachable au connecteur de ligne (40, 340) lorsque le modem de communication sur courant porteur (30, 330) n'est pas monté sur le connecteur de ligne (40, 340) afin d'empêcher toute infiltration de corps étranger dans le connecteur de ligne (40, 340).

2. Appareil ménager selon la revendication 1, dans lequel le modem de communication sur courant porteur (30, 330) est raccordé à des lignes de signaux (60) de l'unité de commande principale (20) et à une ligne électrique (70) de l'appareil ménager pour la transmission/réception de données à destination/en provenance du moniteur distant (1).

3. Appareil ménager selon la revendication 1, dans lequel le connecteur de ligne (40, 340) et le connecteur de raccordement de ligne (50, 350) sont raccordés, de manière détachable, l'un à l'autre sous forme d'une borne femelle et d'une borne mâle de type à crochet.

4. Appareil ménager selon la revendication 1, dans lequel le couvercle de connecteur (300) comprend une portion de fiche (301) à placer dans le connecteur de ligne (40, 340), et une portion de couvercle (302) à l'arrière de la portion de fiche (301) pour renfermer une circonférence du connecteur de ligne (40, 340).

5. Appareil ménager selon la revendication 4, dans lequel la portion de fiche (301) comprend un crochet (303a) pour se mettre en prise, de manière détachable, avec une fente de crochet (343a) à l'intérieur du connecteur de ligne (340), et une extrémité (303b) du crochet (303a) étendue à travers un trou traversant dans la portion de couvercle (302) de manière à être exposée à un extérieur de la portion de couvercle (302), pour permettre une manipulation.

6. Appareil ménager selon la revendication 1, dans lequel le couvercle de connecteur (300) est constitué de plastique ou de résine synthétique.

7. Appareil ménager selon la revendication 1, comprenant en outre : un connecteur de signal raccordé aux lignes de signaux (60) à l'unité de commande principale (20) ; un connecteur électrique raccordé à la ligne électrique (70) à l'appareil ménager ; un connecteur de raccordement de signal au modem de communication sur courant porteur (30, 330) pour un raccordement au connecteur de signal ; et un connecteur de raccordement de source électrique au modem de communication sur courant porteur (30, 330) pour un raccordement au connecteur électrique.

8. Appareil ménager selon la revendication 7, dans lequel le connecteur de signal et le connecteur de raccordement de signal, ainsi que le connecteur électrique et le connecteur de raccordement de source électrique sont raccordés, de manière détachable, l'un à l'autre respectivement sous forme de bornes femelles et de bornes mâles de type à crochet.

9. Appareil ménager selon la revendication 1, dans lequel le modem de communication sur courant porteur (30) est un modem de type intégré prévu dans un intérieur du corps (10).

10. Appareil ménager selon la revendication 9, dans lequel le modem de communication sur courant porteur (30) est attaché fixement sur une surface intérieure du corps (10) avec des organes de serrage.

11. Appareil ménager selon la revendication 9, dans lequel le modem de communication sur courant porteur (30) est attaché fixement à un support de fixation sur une surface intérieure du corps (10).

12. Appareil ménager selon la revendication 1, dans lequel le modem de communication sur courant porteur (330) est de type à montage extérieur à exposer à un extérieur du corps (10).

13. Appareil ménager selon la revendication 12, dans lequel le modem de communication sur courant porteur (330) est attaché fixement à une surface extérieure du corps (10) avec des organes de serrage.

14. Appareil ménager selon la revendication 12, dans lequel l'un du modem de communication sur courant porteur (330) et du corps (10) comprend un bossage de positionnement (391), et l'autre du modem de communication sur courant porteur (330) et du corps (10) comprend un trou de positionnement (392) à l'opposé du bossage de positionnement (391) pour placer le bossage de positionnement (391) à l'intérieur de celui-ci.

15. Appareil ménager selon la revendication 1, comprenant en outre un filtre de bruit (80) dans le corps (10) pour empêcher toute transmission de bruit d'une source électrique à l'unité de commande principale (20) et au modem de communication sur courant porteur (30, 330).

16. Appareil ménager selon la revendication 1, dans lequel le filtre de bruit (80) comporte une borne d'entrée raccordée à une ligne électrique externe à l'appareil ménager, et une borne de sortie raccordée à l'unité de commande principale (20) et au modem de communication sur courant porteur (30, 330).
